# EUROPEAN PATENT APPLICATION

(11) **EP 0 880 242 A2**
(43) Date of publication of application: **25.11.1998**
(21) Application number: 98109034.3
(22) Date of filing: 18.05.1998
(51) Int. Cl.: H04B 10/10, H04B 10/24

(54) **Bidirectional optical spatial transmission apparatus**

(30) Priority: 20.05.1997 JP 144490/97
(71) Applicant: CANON KABUSHIKI KAISHA, Tokyo (JP)
(72) Inventor: Shigeta, Junji, Ohta-ku, Tokyo (JP)
(74) Representative: Weser, Wolfgang

(57) **Abstract**

A bidirectional optical spatial transmission apparatus performs bidirectional data transmission by using optical radio manner, between apparatuses opposingly installed and spaced out a predetermined distance. The transmission apparatus includes a transmitter portion having a unit for generating main and auxiliary signals, combining the auxiliary signal with the main signal and generating an optical transmission signal, a receiver portion having a unit for detecting a reception level of the auxiliary signal contained in an optical reception signal transmitted from the party apparatus, and a control unit for decreasing intensities of the optical transmission signal and the main signal when the reception level of the auxiliary signal in the optical reception signal lowers to a value no more than a threshold.

## Description

### BACKGROUND OF THE INVENTION

### Field of the Invention

The present invention relates to a bidirectional or interactive optical spatial transmission apparatus for performing bidirectional data transmission for a distant place by using optical radio means.

### Related Background Art

In a conventional optical spatial transmission apparatus, a transmission signal is modulated and converted to an optical signal on a transmitter side, the optical signal is transmitted through the air space toward a receiver side, and the optical signal sent from the transmitter side is demodulated on the receiver side. Thus the information signal is transmitted through the air space.

However, since a light beam is likely to attenuate under adverse influences of rain, fog and the like in its transmission line of the air, the transmitter side must generate a large amount of optical power for transmission to always maintain a predetermined optical level on the receiver side.

Further, a transmission path of the light beam fluctuates owing to variations of the air and the like, and a placement position of the optical spatial transmission apparatus, such as a roof on a building, minutely varies due to a change in temperature. Hence an emission direction of the light beam fluctuates.

Thus, the diameter of the light beam on the receiver side need be enlarged such that the transmission beam would not be deviated from the receiver and a level of light output must be set to a high level on the transmitter side such that a stable optical power can be supplied to the receiver side, in order to solve the problem of the above-discussed fluctuation in the emission direction of the light beam caused by external factors of the transmitter side.

On the other hand, the output level of laser light must be regulated within a range which would not adversely affect the human body, and hence a sufficient level of the light output cannot always be provided on the transmitter side. Therefore, the bidirectional optical spatial transmission apparatus is provided with a correcting means for correcting an error in a beam angle of the transmission light beam such that the light beam diameter on the receiver side can be made as small as possible and that the transmission light beam would not be deviated from the location of the opposite apparatus.

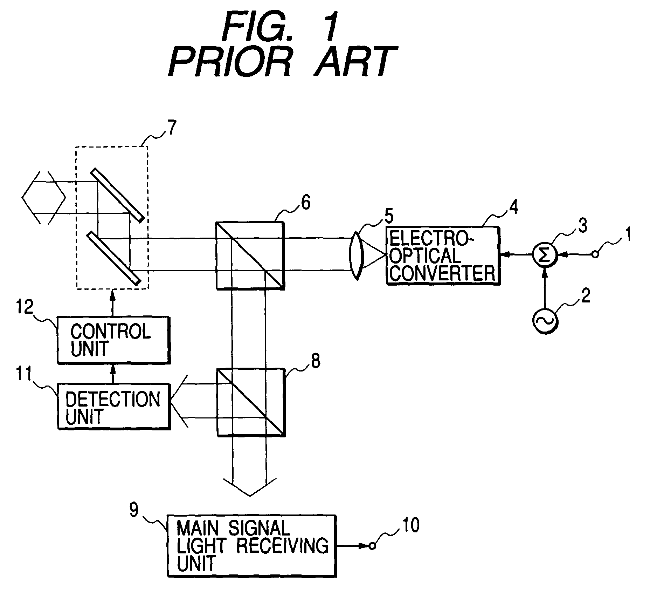

Fig. 1 illustrates the structure of a prior art bidirectional optical spatial transmission apparatus. In Fig. 1, outputs of an input unit 1 of a main signal and a pilot-signal generation unit 2 are connected to an electro-optical converter 4 through a combiner 3. A lens 5, a beam splitter 6, and a beam angle variable unit 7 for varying the angle of a transmission beam are arranged in this order in front of the converter 4. A beam splitter 8 and a light receiving unit 9 of the main signal are arranged along a reflection direction of the beam splitter 6, and an output of the receiving unit 9 is connected to an output unit 10 of the main signal. A detection unit 11 for detecting an angular error of the transmission beam is arranged along a reflection direction of the beam splitter 8. An output of the detection unit 11 is connected to a drive control unit 12 for adjusting the angle of an optical axis, and an output of the drive control unit 12 is further connected to the beam angle variable unit 7 which is comprised of two reflection mirrors.

In opposingly-installed bidirectional optical spatial transmission apparatuses, a main signal for transmission is input to the main-signal input unit 1 on the transmitter side, and the main signal is combined with a sine-wave pilot signal by the combiner 3. The pilot signal output from the pilot-signal generation unit 2 is a narrow-band signal for use in detection of the angular error of the transmission light beam. The combined signals are sent to the apparatus on the receiver side. The pilot signal is detected by the detection unit 11 on the receiver side. The beam angle variable unit 7 and the drive control unit 12 perform the angular correction at a start of and during operation based on the thus-detected information.

In a preparatory procedure, the optical axis of the transmitter portion is aligned with that of the receiver portion in one apparatus, and the angular error between the optical axis of the receiver portion in this apparatus and the optical axis of reception light transmitted from the opposite apparatus is corrected based on the detected pilot signal. This procedure is performed in each of the opposingly-installed apparatuses, and the optical axes of the transmitter portion and the receiver portion are beforehand aligned with each other in each apparatus. As a result, the apparatus can send the transmission light along the same optical axis as that of the reception light transmitted from the party apparatus. Thus, the bidirectional optical spatial transmission can always be performed in a stable manner.

In such a bidirectional optical spatial transmission apparatus provided with the means for correcting the angle of the light beam in the transmitter portion, the combined signals of the main signal and the pilot signal are normally sent from the transmitter side. Since the pilot signal has a narrow band compared with the main signal, the pilot signal can be detected with a high S/N ratio even if it is weak. Therefore, even when the optical signal produced by superimposing the pilot signal on the main signal is so weak that the main signal cannot be transmitted with a required quality, the pilot signal can be set to a level much lower than that of the main signal only if control function can be maintained by such a level. Further, the angular error is detected not by DC light but by the pilot signal, and hence adverse influence of background light can be reduced.

In the prior art apparatus, however, the level of the light output is lowered to prevent adverse effects to the human body, so that a light output with a sufficient level cannot be prepared on the transmitter side. Hence, transmission reliability decreases due to attenuation of the transmission light in the air space and the like.

### SUMMARY OF THE INVENTION

An object of the present invention is to provide a bidirectional optical spatial transmission apparatus which can prevent the adverse effect of laser light to the human body, set its light output to a high level during its normal operation and thus perform highly-reliable transmission so that the above problem can be solved.

A bidirectional optical spatial transmission apparatus of the present invention for achieving the above object is directed to a bidirectional optical spatial transmission apparatus for performing bidirectional data transmission by using optical radio manner, between apparatuses opposingly installed and spaced out a predetermined distance, which includes a transmitter portion having a unit for generating main and auxiliary signals, combining the auxiliary signal with the main signal and generating an optical transmission signal, a receiver portion having a unit for detecting a reception level of the auxiliary signal contained in an optical reception signal transmitted from the party apparatus, and a control unit for decreasing intensities of the optical transmission signal and the main signal when the reception level of the auxiliary signal in the optical reception signal lowers to a value no more than a threshold.

### BRIEF DESCRIPTION OF THE DRAWINGS

Fig. 1 is a view illustrating the structure of a prior art bidirectional optical spatial transmission apparatus.

Fig. 2 is a view illustrating the structure of an embodiment of a bidirectional optical spatial transmission apparatus according to the present invention.

### DETAILED DESCRIPTION OF THE PREFERRED EMBODIMENT

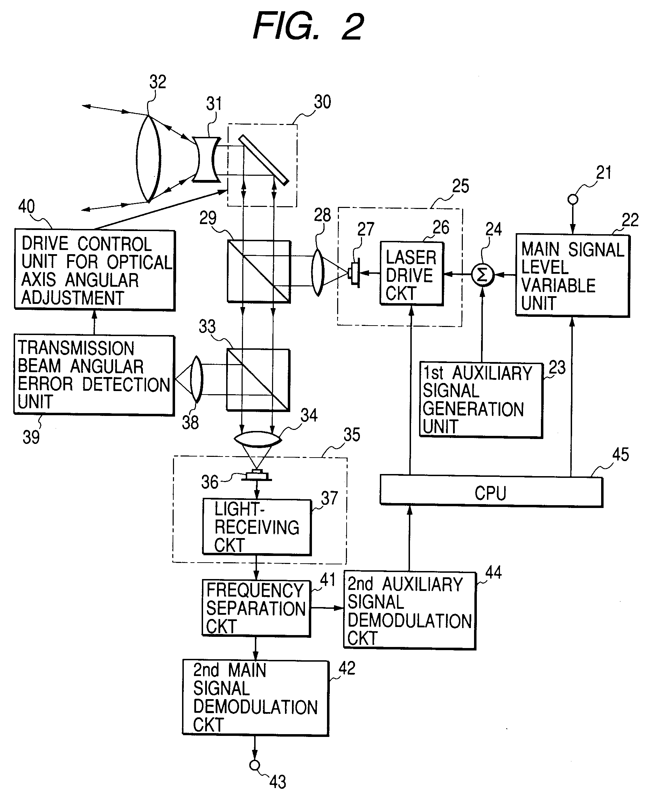

An embodiment of the present invention will be described with reference to Fig. 2.

Fig. 2 illustrates the structure of the embodiment of the bidirectional optical spatial transmission apparatus according to the present invention. In Fig. 2, an output of an input unit 21 for a first main signal to be transmitted to an opposite party-apparatus is connected to a combiner 24 through a first-main-signal level variable unit 22 for varying the level of the first main signal and together with an output of a first-auxiliary-signal generation unit 23 for detecting a reception level at the opposite apparatus. The combined signals are connected to an electro-optical converter 25 for converting the combined electric signals to a first optical signal to be transmitted. The converter 25 is comprised of a laser drive circuit 26 and a laser diode 27. A lens 28 and a polarization beam splitter 29 for separating transmission light and reception light from each other are arranged in front of the laser diode 27. A transmission-beam angle variable unit 30 for varying the angle of a transmission beam and lenses 31 and 32 are arranged along an upward reflection direction of the splitter 29. Thus, optical spatial transmission can be performed between the apparatus on this side and the party apparatus.

A half mirror 33, a lens 34, and an opto-electric converter 35 for converting a second optical reception signal from the party apparatus are arranged along a downward reflection direction of the splitter 29. The opto-electric converter 35 is comprised of a light receiving device 36 and a light receiving circuit 37.

A lens 38 and a transmission-beam angular error detection unit 39 are arranged along a reflection direction of the half mirror 33. An output of the detection unit 39 is connected to a drive control unit 40 for optical-axis angular adjustment. An output of the drive control unit 40 is connected to the transmission-beam angle variable unit 30.

An output of the light receiving circuit 37 is sequentially connected to a frequency separation circuit 41 for performing frequency separation between a second main signal and a second auxiliary signal both contained in a second optical signal, a demodulation circuit 42 for demodulating the second main signal, and an output unit 43 for outputting the second main signal sent from the party apparatus. An output of the frequency separation circuit 41 is sequentially connected to a second auxiliary signal demodulation circuit 44 for demodulating the second auxiliary signal, and a CPU 45 for controlling optical output levels of the first optical signal and the first main signal. An output of CPU 45 is connected to the level variable unit 22 and the laser drive circuit 26.

In the above structure, the first main signal from the input unit 21 is combined with the first auxiliary signal from the signal generation unit 23 by the combiner 24, and the combined signals are converted to the first optical signal by the converter 25. The first optical signal is then emitted from the laser diode 27 as laser light, and the light is sent to the party apparatus through the lens 28, splitter 29, angle variable unit 30, and lenses 31 and 32.

On the other hand, the second optical reception signal sent from the party apparatus is passed through the lenses 32 and 31, angle variable unit 30, and splitter 29, and then divided into two beams by the half mirror 33. One of the two divided beams enters the angular error detection unit 39 through the lens 38, and the drive control unit 40 controls the angle variable unit 30 based on data detected by the unit 39.

The other beam of the two divided beams is passed through the lens 34 and received by the light receiving device 36. The received light is converted to an electric signal by the opto-electric converter 35. The electric signal is separated into the second main signal and the second auxiliary signal by the frequency separation circuit 41. The second main signal divided by the circuit 41 is demodulated by the demodulation circuit 42, and the demodulated signal is supplied to the output unit 43 for the second main signal. The second auxiliary signal divided by the circuit 41 is demodulated by the demodulation circuit 44, and the thus-demodulated signal is output to CPU 45.

When the reception level of the detected second auxiliary signal lowers to a value no more than a threshold owing to transmission problems, such as the trouble that the human body intercepts the transmission light during transmission and the trouble that the attenuation amount of transmission light in the air increases due to bad weather and the like, CPU 45 supplies instructions to the laser drive circuit 26 to decrease the bias current injected into the laser diode 27 and to reduce the light output level of the first main optical signal to a level that enables stable transmission. The CPU 45 also supplies instructions to the level variable unit 22 to decrease the level of the first main signal. Then, when the above problem is solved and CPU 45 detects that the reception level of the second auxiliary signal exceeds the threshold, CPU 45 sends instructions to the laser drive circuit 26 and the level variable unit 22 to return light output levels of the first optical signal and the first main signal to their original ones.

Even when the light output level of the first optical signal produced by superimposing the first auxiliary signal on the first main signal is lowered, transmission power of the first auxiliary signal remains unchanged since its modulation degree is set smaller than that of the first main signal. Thus, transmission characteristics of the first auxiliary signal are maintained at ones during normal operation. As a result, the light output levels of the first optical signal and the first main signal can surely be returned to the original ones after those are lowered.

Further, the pilot signal used for correction of the angle of the transmission light in the prior art apparatus illustrated in Fig. 1 can be used together with the auxiliary signal of this embodiment. Thereby, a new auxiliary signal source need not be arranged, and highly-reliable bidirectional optical spatial transmission can be achieved at an inexpensive cost while securing safety of the human body and without damaging its essential communication performance. Although the reception level of the auxiliary signal is detected by the opto-electric converter 35 which also detects the main signal, the auxiliary signal may be detected by the angular error detection unit 39.

As described in the foregoing, in a bidirectional optical spatial transmission apparatus according to the present invention, intensities of the optical transmission signal and the main signal are decreased when the transmission trouble, such as interception of the transmission light by the human body during transmission, occurs. Thus, when the human body comes in a dangerous zone which can give adverse influences to its eyes and the like, the apparatus detects such condition and can suppress the light output level to a low one. The apparatus can set the light output level to a high value during other times. Therefore, highly-reliable bidirectional optical spatial transmission can be performed during normal operation.

## Claims

1. A bidirectional optical spatial transmission apparatus for performing bidirectional data transmission by using optical radio means, between apparatuses opposingly installed and spaced out a predetermined distance, said apparatus comprising:
means for generating a first optical signal by combining a first main signal and a first auxiliary signal;
a transmission optical system for transmitting the first optical signal to the party apparatus;
a reception optical system for receiving a second optical signal containing a second auxiliary signal transmitted from the party apparatus;
detection means for detecting a reception level of the second auxiliary signal; and
control means for decreasing intensities of the first optical signal and the first main signal when the reception level of the second auxiliary signal lowers to a value no more than a threshold.

2. A bidirectional optical spatial transmission apparatus according to claim 1, wherein said control means decreases the intensities of the first optical signal and the first main signal when the reception level of the second auxiliary signal lowers to the value no more than the threshold, and returns the intensities of the first optical signal and the first main signal to their original ones when the reception level of the second auxiliary signal exceeds the threshold.

3. A bidirectional optical spatial transmission apparatus according to claim 1, wherein the second auxiliary signal is a signal for detection of an angular error of transmission light to be used for correction of an angle of the transmission light.

4. A method for controlling an intensity of transmission light in a bidirectional optical spatial transmission apparatus for performing bidirectional data transmission by using optical radio manner, between apparatuses opposingly installed and spaced out a predetermined distance, said method comprising the steps of:
generating a first optical signal by combining a first main signal and a first auxiliary signal;
transmitting the first optical signal to the party apparatus;
receiving a second optical signal containing a second auxiliary signal transmitted from the party apparatus;
detecting a reception level of the second auxiliary signal; and
decreasing intensities of the first optical signal and the first main signal when the reception level of the second auxiliary signal lowers to a value no more than a threshold.

5. A method for controlling an intensity of transmission light in a bidirectional optical spatial transmission apparatus for performing bidirectional data transmission by using optical radio manner, between apparatuses opposingly installed and spaced out a predetermined distance, said method comprising the steps of:
generating a first optical signal by combining a first main signal and a first auxiliary signal;
transmitting the first optical signal to the party apparatus;
receiving a second optical signal containing a second auxiliary signal transmitted from the party apparatus;
detecting a reception level of the second auxiliary signal;
decreasing intensities of the first optical signal and the first main signal when the reception level of the second auxiliary signal lowers to a value no more than a threshold; and
returning the intensities of the first optical signal and the first main signal to their original ones when the reception level of the second auxiliary signal exceeds the threshold.
